# EUROPÄISCHE PATENTSCHRIFT

(11) **EP 0 930 769 B1**
(45) Veröffentlichungstag und Bekanntmachung des Hinweises auf die Patenterteilung: **09.04.2008**
(21) Anmeldenummer: 99100723.8
(22) Anmeldetag: 15.01.1999
(51) Int. Cl.: H04M 17/00

(54) **Verfahren zur Verarbeitung von Teilnehmerdaten in Teilnehmerdatenbanken von Kommunikationsnetzen mit Gebührenguthaben und Teilnehmerendgeräten**
Method for processing user data in databases of communications networks with credit of charges and terminal equipments
Procédé pour le traitement de données d'usager sur des bases de données de réseaux de communication avec crédit de frais et équipements terminaux

(30) Priorität: 16.01.1998 DE 19801304
(43) Veröffentlichungstag der Anmeldung: 21.07.1999
(73) Patentinhaber: T-Mobile Deutschland GmbH, 53227 Bonn (DE)
(72) Erfinder: Bünte, Rodgart, 53347 Alfter (DE); Fries, Jürgen, 53604 Bad Honnef (DE); Jaeschke, Michael, 53332 Bornheim (DE); Näser, Babette, 53773 Hennef (DE)
(74) Vertreter: Riebling, Peter

(56) Entgegenhaltungen:
- EP-A- 0 848 537
- DE-U- 29 713 989
- GB-A- 2 309 860
- US-A- 5 577 109
- SLAKMON S ET AL: "THE POTENTIAL OF PREPAID PHONE CARD SERVICES" ALCATEL TELECOMMUNICATIONS REVIEW, 1. April 1998, Seiten 139-144, XP000751430

## Beschreibung

Die Erfindung betrifft ein Verfahren zur Verarbeitung von Teilnehmerdaten in Kommunikationsnetzen mit Gebührenguthaben und Teilnehmerendgeräten. Es können dabei z.B. Festnetze, Mobilfunknetze, Datennetze o.ä. vorgesehen sein. Aus dem Stand der Technik ist bereits ein Verfahren zur Berechnung von Gebühren in Kommunikationsnetzen aus DE 44 19 651 A1 bekannt, bei dem für Teilnehmer des Netzes ein Guthaben angelegt wird und laufende Verbindungsgebühren von dem entsprechenden Guthaben abgebucht werden. Das Guthaben kann durch Zahlungen wieder aufgeladen werden. Bei einem solchen System wird dem Teilnehmer so lange die Möglichkeit zur Kommunikation gegeben, solange noch ein positives Gebührenguthaben besteht. Ist das Guthaben erschöpft, so wird die Kommunikationsmöglichkeit des Teilnehmers gesperrt bzw. eine bestehende Verbindung unterbrochen.

Nachteilig ist jedoch an solchen Systemen, daß auch Teilnehmerverhältnisse in den Datenbanken des Netzbetreibers über lange Zeit aktiv bleiben, die vom Teilnehmer tatsächlich nicht mehr genutzt werden, z.B. weil für die Teilnehmerverhältnisse nur noch ein minimaler Guthabensbetrag besteht und der Teilnehmer nicht mehr an einer Wiederaufladung des Guthabens interessiert ist. Der Netzbetreiber ist daher gezwungen, einen unter Umständen großen Bestand an Teilnehmerdaten zu verwalten, obwohl nur ein Bruchteil der Teilnehmerverhältnisse tatsächlich aktiv ist.

Das im Zeitrang ältere, aber nachveröffentlichte Dokument EP 848 537 A1 offenbart ein Verfahren zur Verarbeitung von Teilnehmerdaten in Teilnehmerdatenbanken von Kommunikationsnetzen mit Gebührenguthaben und Teilnehmerendgeräten, bei dem die Teilnehmerdaten mit Guthabensdaten und Zeitdaten versehen werden, wobei bei aufgebrauchten Gebührenguthaben eine Ruhezeit beginnt, in welcher der Teilnehmerdatensatz für gewisse Kommunikationsdienste gesperrt wird und anschließend entweder bei Erhöhung des gespeicherten Wertes der Guthabensdaten die Ruhezeit beendet und der Teilnehmerdatensatz wieder für alle Kommunikationsdienste freigeschaltet wird, oder bei Überschreiten eines weiteren Zeitdatums ohne erfolgte Erhöhung des gespeicherten Wertes der Guthabensdaten der Teilnehmerdatensatz für alle Kömmunikationsdienste gesperrt und/oder in der Teilnehmerdatenbank gelöscht wird. Dadurch, dass die Ruhezeit erst nach aufgebrauchtem Gebührenguthaben beginnt, weist dieses Verfahren ebenfalls die in Zusammenhang mit der DE 44 19 651 A1 beschriebenen Nachteile auf.

Aufgabe der vorliegenden Erfindung ist es daher, ein Verfahren zur Verarbeitung von Teilnehmerdaten in Kommunikationsnetzen mit Gebührenguthaben bereitzustellen, das eine effektive Handhabung der Teilnehmerdaten bzw. Teilnehmerverhältnisse erlaubt.
Diese Aufgabe wird gelöst durch die Merkmale des Anspruches 1. Der Netzbetreiber kann durch die Verbindung der Teilnehmerdaten mit Zeitdaten z.B. die Festlegung von maximalen Laufzeiten von Teilnehmerverhältnissen verwirklichen. Andererseits wird durch die Vorsehung einer kompletten Sperrung bzw. Datenlöschung erst bei Überschreiten eines späteren Zeitdatums gewährleistet, daß z.B. noch bestehende Guthaben nicht sofort verfallen, sondern der Teilnehmer noch eine gewisse Ruhezeit des Teilnehmerverhältnisses mit eingeschränkten Nutzungsmöglichkeiten beanspruchen kann, um das Teilnehmerverhältnis durch Guthabensaufladung wieder zu aktivieren.

Die Teilnehmerdatensätze können z.B. durch Setzen von entsprechenden Statusmarken in den Datensätzen für gewisse Kommunikationsdienstleistungen wie Sprachkommunikationsdienste, abgehende Kommunikationsverbindungen, Sonderdienste etc. gesperrt werden. Dabei kann vorgesehen werden, daß mindestens ein Kommunikationsdienst zur Kommunikation vom Kommunikationsnetz zum Teilnehmerendgerät freigeschaltet bleibt. Dieser kann bevorzugt dazu genutzt werden, Nachrichten über den Status des Teilnehmerdatensatzes auf das Teilnehmerendgerät zu übermitteln, wie Informationen über die Dauer oder den Ablauf der.Ruhezeit bzw. das Überschreiten von Zeitdaten, den Wert der Guthabensdaten etc. So kann der Teilnehmer vor oder bei Überschreiten der Zeitdaten über den Status seines Teilnehmerverhältnisses informiert werden und auf vorzunehmende Handlungen hingewiesen werden.

Eine spezielle Ausführungsform der Erfindung wird anhand des folgenden Beispiels im Rahmen eines Mobilfunknetzes erläutert.

Für Teilnehmer eines Mobilfunknetzes sind in der Heimatdatenbank HLR des Netzes Teilnehmerdatensätze angelegt. Zumindest für einen Teil der Teilnehmer sind die Datensätze mit Gebührenguthabensdaten und Zeitdaten versehen. Teilnehmer mit Gebührenguthaben sollen für einen konfigurierbaren Zeitraum (Ruhezeit) für abgehende und kommende Kommunikationsverbindungen gesperrt werden können. Während der Ruhezeit sollen sie weiterhin Kurznachrichten (SMS) empfangen können. Sie haben zudem die Möglichkeit, ihr Gebührenguthaben aufzuladen. Das Aufladen des Gebührenguthabens während der Ruhezeit beendet diese und führt zu einer Verlängerung der Erreichbarkeit, gerechnet vom Tag der Aufladung an. Lädt der Teilnehmer sein Guthaben nicht auf, wird sein Teilnehmerdatensatz zum Ende der Ruhezeit endgültig gesperrt oder gelöscht, d.h. der Teilnehmer wird gekündigt.

Es kann individuell für jeden Kommunikationsdienst des Kommunikationsnetzes definiert werden, ob das Ruhezeitverfahren genutzt werden soll oder nicht. Zusätzlich kann die Dauer des Ruhezeitverfahrens variiert werden.

Der Teilnehmer hat während der gesamten Ruhezeit die Möglichkeit sein Guthaben durch Einzahlungen o.ä. aufzuladen, z.B. über Kreditinstitute, die mit dem Kommunikaiotnsnetz in Verbindung stehen. Der Wert der Guthabensdaten des Teilnehmerdatensatzes wird dabei um den Betrag der Einzahlung erhöht. Darüberhinaus beendet eine Aufladung die Ruhezeit und bringt den Teilnehmern in Abhängigkeit von seinem Guthaben in folgenden Status:
■ keine Kommunikationssperre - Der Teilnehmer hatte zum Beginn der Ruhezeit entweder keine Kommunikationssperre oder eine Sperre für abgehende Kommunikationsverbindungen und sein Guthabenswert wurde durch die Aufladung positiv (> DM 0,00).
■ Sperre für abgehende Kommunikationsverbindungen - Der Teilnehmer hatte bereits zum Beginn der Ruhezeit eine Sperre für abgehende Kommunikationsverbindungen und der Guthabenswert ist trotz der Aufladung nicht positiv (≤ DM 0,00).

Der Beginn der nächsten Ruhezeit, d.h. das erste Zeitdatum errechnet sich dann z.B. wie folgt:
Tag der Aufladung + Laufzeit der Teilnehmererreichbarkeit (kann abhängig vom Aufladungswert und von der Kommunikaitonsdienstleistung sein) Bsp.: Ein Teilnehmer erhält gemäß Produktdefinition für 50,-- DM 60 Tage Erreichbarkeit. Er befindet sich in der Ruhezeit und erhöht seinen Guthabenswert am 06.10.97 durch Aufladung von 50,-- DM. Das erste Zeitdatum wird dann von Seiten des Kommunikationsnetzes für seinen Datensatz auf den 06.12.97 gesetzt. Ab dann beginnt die nächste Ruhezeit.

Der Guthabenswert im Teilnehmerdatensatz wird bei Überschreitung des ersten Zeitdatums, d.h. mit Beginn der Ruhezeit nicht verändert. Lädt der Teilnehmer während der Ruhezeit sein Guthaben auf, so wird der Guthabenswert um den Aufladungswert erhöht. Lädt der Teilnehmer sein Guthaben nicht auf, d.h. erkennt das Netz bei Überschreitung des zweiten Zeitdatums, daß keine Veränderung des Guthabenswertes seit Überschreitung des ersten Zeitdatums erfolgte, so wird der Teilnehmerdatensatz mit dem zugehörigen Guthabenswert im HLR komplett gelöscht.

n1 Tage (Wert n1 für jeden Kommunikationsdienst konfigurierbar) vor Überschreiten des ersten Zeitdatums (Beginn der Ruhezeit) übermittelt das Kommunikationsnetz eine erste Kurznachricht an das Teilnehmerendgerät des betreffenden Teilnehmers. Diese enthält Hinweise auf den baldigen Beginn der Ruhezeit.
n2 Tage (Wert n2 für jeden Kommunikationsdienst konfigurierbar) vor Überschreiten des zweiten Zeitdatums (Ende der Ruhezeit) übermittelt das Kommunikationsnetz eine zweite Kurznachricht an das Teilnehmerendgerät des betreffenden Teilnehmers, die Informationen über die baldige Beendigung des Teilnehmerverhältnisses enthält.

Bei Überschreiten des ersten Zeitdatums wird der betreffende Teilnehmerdatensatz durch Setzen von Statusmarken im HLR für abgehende und kommende Kommunikationsverbindungen gesperrt.

| Attribut | Wert |
|---|---|
| barrOutCalls | 1 (barrOfOutgoingCalls) |
| barrInCalls | 1 (barrOfIncomingCalls) |

Lädt der Teilnehmer während der Ruhezeit sein Guthaben auf, so sind folgende Fälle zu unterscheiden:
■ Im Teilnehmerdatensatz ist nach dem Aufladen ein positiver Guthabenswert (> DM 0,00) gespeichert. Dann werden die Statusmarken zurückgesetzt, d.h. die Sperren für abgehende und kommende Kommunikationsverbindungen aufgehoben.

| Attribut | Wert |
|---|---|
| barrOutCalls | 0 (none) |
| barrInCalls | 0 (none) |

■ Im Teilnehmerdatensatz ist nach dem Aufladen kein positiver Guthabenswert (> DM 0,00) gespeichert Dann wird lediglich die Statusmarke (d.h. die Sperre) für kommende Kommunikationsverbindungen zurückgesetzt.

| Attribut | Wert |
|---|---|
| barrOutCalls | 1 (barrOfOutgoingCalls) |
| barrInCalls | 0 (none) |

Das Ruhezeitverfahren wird auch auf Teilnehmerdatensätze angewendet, für die bereits durch entsprechende Statusmarken Sperren aktiviert wurden, die z.B. durch Unterschreitung von Guthabenswerten ausgelöst wurden. Die entsprechenden Sperren werden dabei auchbei Überschreitung der Zeitdaten aufrechterhalten bzw. weitere Sperren hinzugefügt oder der Datensatz bei Überschreitung des zweiten Zeitdatums gelöscht.

Es kann vorgesehen sein, daß der Teilnehmerdatensatz eines Teilnehmers vor Erreichen des ersten Zeitdatums im HLR aufgrund Unterschreitung von Guthabenswerten gelöscht wurde. Für diesen Fall wird der Datensatz im HLR bei Überschreiten des ersten Zeitdatums erneut eingerichtet und es werden die Statusmarken für eine Sperre von abgehenden und kommenden Kommunikationsverbindungen im HLR eingerichtet. Das weitere Verfahren wird entsprechend durchgeführt.

| **Attribut** | **Wert** |
|---|---|
| barrOutCalls | 1 (barrOfOutgoingCalls) |
| barrInCalls | 1 (barrOfIncomingCalls) |

## Patentansprüche

1. Verfahren zur Verarbeitung von Teilnehmerdaten in Teilnehmerdatenbanken von Kommunikationsnetzen mit Gebührenguthaben und Teilnehmerendgeräten, wobei die Teilnehmerdaten mit Guthabensdaten und Zeitdaten versehen werden, **dadurch gekennzeichnet,**
**dass** bei Überschreiten eines ersten Zeitdatums, das durch eine Festlegung von maximalen Laufzeiten von Teilnehmerverhältnissen bestimmt wird, eine Ruhezeit beginnt, in welcher der Teilnehmerdatensatz für gewisse Kommunikationsdienste gesperrt wird und anschließend entweder
bei Erhöhung des gespeicherten Wertes der Guthabensdaten die Ruhezeit beendet und der Teilnehmerdatensatz wieder für alle Kommunikationsdienste freigeschaltet wird, sofern sich ein positiver Guthabenswert ergibt, oder
bei Überschreiten eines weiteren Zeitdatums ohne erfolgte Erhöhung des gespeicherten Wertes der Guthabensdaten der Teilnehmerdatensatz für alle Kommunikationsdienste gesperrt und/oder in der Teilnehmerdatenbank gelöscht wird.

2. Verfahren nach Anspruch 1, wobei bei Überschreiten des ersten Zeitdatums der Teilnehmerdatensatz für mindestens einen Kommunikationsdienst zur Kommunikation vom Kommunikationsnetz zum Teilnehmerendgerät freigeschaltet bleibt.

3. Verfahren nach Anspruch 1 oder 2, wobei vor oder bei Überschreitung mindestens eines der Zeitdaten Hinweisinformationen und/oder Statusinformationen vom Kommunikationsnetz an das Teilnehmerendgerät übertragen werden.

## Claims

1. Method for processing subscriber data in subscriber databases of communications networks having charge credits and subscriber terminal devices, wherein the subscriber data are provided with credit data and time data, **characterised in that** on exceeding a first time datum that is determined by defining maximum terms of subscriber relationships a rest period begins in which the subscriber data set is blocked for certain communications services and then either
on increasing the stored value of the credit data the rest period is terminated and the subscriber data set is cleared again for all communications services provided a positive credit value results, or
on exceeding another time datum without the stored value of the credit data having been increased the subscriber data set is blocked for all communications services and/or deleted in the subscriber database.

2. Method according to claim 1, wherein on exceeding the first time datum the subscriber data set is cleared for at least one communications service for communicating from the communications network to the subscriber terminal device.

3. Method according to claim 1 or 2, wherein prior to or on exceeding at least one of the time datum points reference information and/or status information is transmitted from the communications network to the subscriber terminal device.

## Revendications

1. Procédé pour traiter des données d'abonné dans des banques de données d'abonné de réseaux de communication avec un crédit et des terminaux d'abonnés, les données d'abonné étant pourvues de données de crédit et de dates, **caractérisé en ce que** si une première date que l'on définit en fixant des durées maximales d'abonnement est dépassée, un temps de repos commence pendant lequel l'enregistrement de données d'abonné est bloqué pour certains services de communication, puis
soit ce temps de repos se termine si la valeur stockée des données de crédit augmente, et l'enregistrement de données d'abonné est à nouveau autorisé pour tous les services de communication dans la mesure où on obtient une valeur de crédit positive,
soit l'enregistrement de données d'abonné est bloqué pour tous les services de communication et/ou effacé dans la banque de données d'abonné si on dépasse une autre date sans qu'il y ait eu d'augmentation de la valeur stockée des données de crédit.

2. Procédé selon la revendication 1, selon lequel si la première date est dépassée, l'enregistrement de données d'abonné reste autorisé pour au moins un service de communication en vue de la communication dudit réseau vers le terminal d'abonné.

3. Procédé selon la revendication 1 ou 2, selon lequel avant ou lors du dépassement de l'une au moins des dates, des informations d'instruction et/ou d'état sont transmises par le réseau de communication au terminal d'abonné.
